# FASCICULE DE BREVET EUROPEEN

(11) **EP 3 361 103 B1**
(45) Date de publication et mention de la délivrance du brevet: **01.04.2020**
(21) Numéro de dépôt: 18151999.2
(22) Date de dépôt: 17.01.2018
(51) Int. Cl.: F04D 27/00, F04D 25/06, F04D 25/08

(54) **SYSTÈME DE COMMANDE D'UN MOTEUR DE VENTILATEUR**
STEUERSYSTEM EINES LÜFTERMOTORS
SYSTEM FOR CONTROLLING A FAN MOTOR

(30) Priorité: 08.02.2017 FR 1751052
(43) Date de publication de la demande: 15.08.2018
(73) Titulaire: Atlantic Climatisation et Ventilation, 69330 Meyzieu (FR)
(72) Inventeur: FOURMENTIN, Dorian, 69100 Villeurbanne (FR); CHANUT, Guillaume, 42800 Rive de Gier (FR); AUVERGNON, Anthony, 69100 Villeurbanne (FR)
(74) Mandataire: Allain, Laurent

(56) Documents cités:
- GB-A- 245 797
- US-A1- 2014 042 949
- US-A1- 2014 328 705

## Description

L'invention se rapporte à un système de commande d'un moteur de ventilateur.

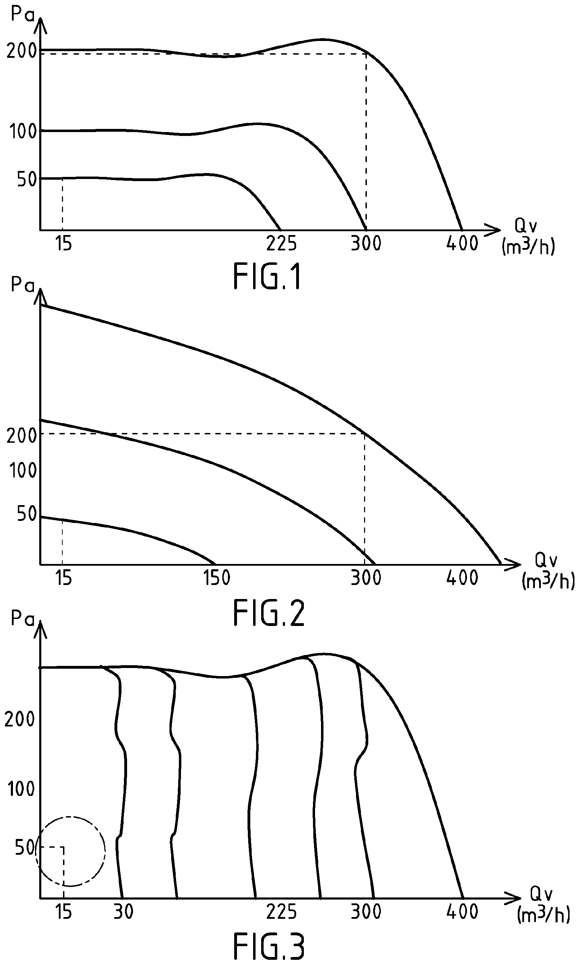

Sur les solutions actuelles, notamment en turbine centrifuge à action, on distingue plusieurs types de régulation moteur comme par exemple :
- Régulation en vitesse constante : le moteur régule à une vitesse fixe, quel que soit le couple appliqué comme l'illustre la figure 1. Chaque courbe apparaissant sur le diagramme de cette figure matérialise une loi de régulation sous la forme d'une variation de la pression en fonction du débit, pour une vitesse du moteur donnée.
- Régulation en couple constant : le moteur applique un couple constant, et ajuste son régime pour maintenir ce couple, comme l'illustre la figure 2. Chaque courbe apparaissant sur le diagramme de cette figure matérialise une loi de régulation sous la forme d'une variation de la pression en fonction du débit, pour un couple du moteur donné. Du point de vue du moteur, la puissance électrique étant l'image du couple, ce type de régulation est équivalent à une régulation en puissance constante.
- Régulation en débit constant : grâce à des calculs et des algorithmes, également appelés mapping, le moteur régule un débit constant, quelle que soit la pression du système comme l'illustre la figure 3. Chaque courbe apparaissant sur le diagramme de cette figure matérialise une loi de régulation sous la forme d'une variation de la pression en fonction du débit, à un débit d'air donné.
- Régulation en pression constante : grâce à des calculs et des algorithmes, le moteur régule une pression constante quel que soit le débit et pertes de charges du système.

La solution de pilotage en débit constant, applicable uniquement avec des turbines centrifuges à action, est très intéressante dans les systèmes aérauliques. Cependant, elle n'est efficace qu'à des débits moyens ou importants, si bien que ce type de régulation ne peut descendre à bas débits, tels que par exemple ceux correspondant à la zone matérialisée par le cercle de la figure 3. En effet, cette régulation en débit constant étant basée sur un modèle mathématique de type Q=f (I, rpm), I étant une image de l'intensité et rpm, la vitesse de rotation de l'arbre (en nombre de rotations par minutes) et l'intensité I devenant tellement faible à bas débit, cette mesure et ce modèle perdent de leur précision et de leur fiabilité dans cette plage de fonctionnement, par la tolérance de fabrication du ou des composants. Pour une moto turbine allant jusqu'à 300m³/h par exemple, il sera difficile d'obtenir une régulation à débit constant par mapping en deçà de 30m³/h.

Afin de pallier cette insuffisance, il est possible, de manière alternative, de réaliser une mesure de débit de façon directe au moyen par exemple d'un capteur de pression dynamique disposé dans une restriction aéraulique du système. Ces méthodes sont bien connues de l'homme de métier, cependant cette alternative a l'inconvénient d'amener un surcoût sensible à l'installation.

L'invention proposée vise à s'affranchir des inconvénients précités.

La loi de commande permet de définir les conditions de communication entre un moteur et l'élément qui le pilote. Cette communication se fait habituellement par un signal 0-10V, par un signal de type PWM (ou MLI, modulation de largeur d'impulsion), ou bien encore par une communication MODBUS ou autre protocole d'informatique industrielle évolué.

Dans l'exemple d'un signal 0-10V, associé à une régulation moteur en vitesse constante, une loi de commande pourrait être une variation continue et proportionnelle de la vitesse entre les bornes suivantes :
2V = vitesse mini (800 rpm)
10V = vitesse maxi (3000 rpm)

Ces éléments concernent particulièrement les moteurs électriques associés à une électronique interne ou externe de contrôle moteur. On considère notamment les moteurs de technologie brushless, c'est-à-dire les moteurs synchrones à aimant permanent, appelés communément moteur BLDC (de l'anglais *Brushless direct current*) ou moteur PMSM (de l'anglais *Permanent Magnet Synchroneous Motor*). Ces éléments concernent enfin également des moteurs électriques de natures différentes (moteur asynchrone, moteur de type « *shaded pales* », moteur à courant continu, etc.), associés à une commande électronique externe, de type variateur.

Un système de commande selon l'invention permet de piloter avec maitrise et précision, un appareil de ventilation de manière à bénéficier des avantages liés à une régulation en débit constant et de manière à atteindre des débits faibles.

L'invention a pour objet un système de commande défini dans la revendication 1. Dans un tel système de commande pour un ventilateur, le ventilateur comprenant un moteur et une turbine, ledit moteur est piloté à partir d'une loi de commande définie par un calculateur.

La principale caractéristique d'un système de commande selon l'invention, est que la loi de commande résulte de l'adjonction de deux lois de régulation distinctes, une première loi de régulation pour faire fonctionner le moteur sur une première plage de débit et une deuxième loi de régulation pour faire fonctionner le moteur sur une deuxième plage de débit. Le principe d'un tel système de commande est de pouvoir piloter un ventilateur au moyen d'une loi de commande faisant intervenir une première loi de régulation à couple constant, et une deuxième loi de régulation à débit constant. De cette manière, la première loi de régulation permet au ventilateur d'atteindre des débits faibles, par exemple typiquement inférieurs à 40m³/h, et la deuxième loi de régulation permet au ventilateur d'atteindre des débits plus élevés, par exemple typiquement compris entre 40m³/h et 350m³/h.

Des modes de réalisation préférés sont définis dans les revendications dépendantes.

On donne ci-après, une description détaillée d'un mode de réalisation préféré d'un système de commande selon l'invention, en se référant aux figures suivantes :
- La figure 1 est un diagramme de la pression en fonction du débit d'air illustrant un exemple de ventilateur régulant à trois vitesses constantes données,
- La figure 2 est un diagramme de la pression en fonction du débit d'air illustrant un exemple de ventilateur régulant à trois couples constants donnés,
- La figure 3 est un diagramme de la pression en fonction du débit d'air un exemple de ventilateur régulant à plusieurs débits constants donnés,
- La figure 4 est un diagramme illustrant schématiquement un exemple d'une loi de commande fournit par un système de commande selon l'invention,
- La figure 5 est un diagramme illustrant différentes courbes aérauliques selon l'invention,
- La figure 6 est un diagramme illustrant des exemples de courbes à couple constant.

Pour rappel, un ventilateur comprend un ensemble formé par une turbine et un moteur généralement électrique, et une volute. Le moteur et la turbine peuvent être regroupés pour constituer une moto-turbine.

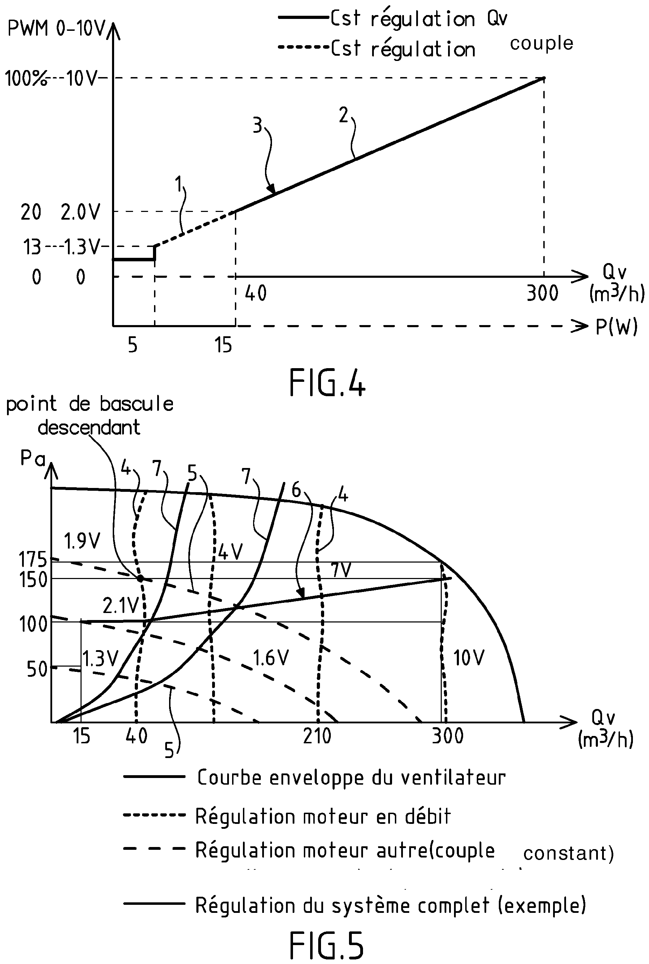

En se référant à la figure 4, pour permettre à la fois de profiter des avantages d'une régulation en débit constant, et d'un faible régime de fonctionnement de manière à atteindre des débits faibles, un système de commande selon l'invention propose de combiner deux types de loi de régulation 1, 2 dans une seule loi de commande 3 :
- Une première loi de régulation 1 à couple constant pour obtenir de faibles débits, typiquement correspondant à une puissance compris entre 5 et 15W sur l'exemple illustré au diagramme de la figure 4,
- Une deuxième loi de régulation 2 à débit constant pour obtenir des débits plus élevés, typiquement compris entre 40m³/h et 300m³/h sur l'exemple illustré au diagramme de la figure 4.

De cette manière, dans la partie droite 2 de la courbe 3, on réalise une régulation en débit constant, permettant de profiter des avantages liés à cette régulation. Dans la partie gauche 1 de la courbe 3, on réalise une régulation à à couple constant, qui permet d'atteindre des débits bas.

Ainsi, dans cette configuration, le moteur est à la fois capable de descendre à des débits faibles, comme par exemple 16 m³/h, et à la fois capable de réguler en débit constant sur la majorité de sa plage de fonctionnement (entre 40 et 300 m³/h).

La figure 5 illustre quelques exemples de courbes aérauliques à différentes consignes. Pour les consignes régulées en débit constant on remarque les courbes 4 sensiblement verticales, c'est-à-dire à débit sensiblement identique, quelle que soit la pression. Les courbes 5 représentant une régulation en couple constant, ont une orientation plus oblique, variable selon le type de la turbine utilisée. Il est à noter que le paramétrage de la loi de commande, et notamment du point de bascule, est important pour le bon fonctionnement de la régulation selon l'invention. Ainsi, lors de la définition de la courbe « haute » de la régulation en couple constant, on calera celle-ci de manière à atteindre le point de pression maximum prévu dans l'utilisation du moteur, au débit minimal de la courbe en débit constant. Dans cet exemple, sous 2V, le débit minimal régulé est de 40 m³/h. Si l'application demande un maximum de 150 Pa à 40m³/h, on règlera la dernière courbe régulant en couple constant (1.9V) pour croiser le point 40m³/h - 150Pa. Ainsi, quel que soit le point de fonctionnement demandé, il ne pourra pas y avoir de « zone morte », c'est-à-dire de point de fonctionnement souhaité par l'utilisateur qui serait inaccessible. Tout au plus, il pourra y avoir un recouvrement, c'est-à-dire qu'en passant de 2V à 1.9V le ventilateur pourra légèrement accélérer, dans le cas où la pression de l'installation à ce débit est inférieure. Cependant ce phénomène est très réduit et ne nuit aucunement à la stabilité de la régulation du système.

On représente en figure 5 un exemple de courbe 6 de régulation globale souhaitée d'une installation équipée d'un ventilateur, d'un filtre et d'un échangeur thermique entre le ventilateur et le réseau d'aspiration, à partir d'un système de commande selon l'invention. Il s'agit ici d'une régulation dite à pression croissante, de 40m³/h-100Pa à 150m³/h-150Pa. Pour réaliser cette régulation, le système intègre un capteur de pression et une carte de régulation, ainsi qu'un moteur, intégrant une carte de régulation ou associée à une carte de régulation. Bien évidemment, la carte de régulation du moteur et la carte de régulation du système de ventilation peuvent être combinées avantageusement pour des raisons de coût. Cette mesure de pression au niveau du réseau aéraulique est rendue indispensable par le fait que le système intègre un filtre et un échangeur, positionnés entre le ventilateur, en aval du flux d'air, et la prise de pression du réseau aéraulique, en amont du flux d'air, ces deux composants étant susceptibles d'apporter des pertes de charge variables selon les cycles d'encrassement et de givrage. Si le système n'avait pas de pertes de charge variables, le ventilateur pourrait estimer son débit et sa pression par calcul et donc réaliser quasiment de lui-même une courbe de régulation croissante, sauf à débit réduit, pour les mêmes raisons de précisions que celles décrites ci-avant pour la régulation en débit constant ou pression constante. Pour réguler, la carte mesure la pression au niveau du réseau aéraulique, puis la compare à une première consigne, et ajuste ladite consigne ventilateur s'il y a besoin. La consigne ventilateur étant l'image du débit dans le système, sur la deuxième loi de commande, la régulation va recalculer la consigne de pression, en fonction du débit, selon la loi de commande globale ou plus précisément l'équation de la courbe 6 de la figure 5. Ce type de régulation utilise ainsi la fonction de moteur à débit constant pour éviter l'intégration d'une mesure de débit, notamment par capteur de pression dans le système, qui est une source de coût supplémentaire. Dans notre exemple, avec une courbe de fonctionnement souhaitée de 100Pa à 40m³/h au niveau du réseau, la valeur de 150Pa disponible au ventilateur, au point de bascule, permet d'absorber 50Pa de pertes de charge liées à un encrassement de filtre ou un givrage de l'échangeur, tous deux disposés entre le ventilateur et le réseau.

Dans notre cas, la fonction de débit constant, et donc l'information de débit, n'étant disponible qu'à partir de 40m³/h, on réalisera donc une régulation à pression constante dans le système, pour des débits inférieurs à 40m³/h.

Sur la figure 5, dans le cas où le système aéraulique réduit son débit, lors par exemple de la fermeture des bouches hygro-réglables, le point de fonctionnement aéraulique du système va « glisser » de droite à gauche le long de la courbe 6 de régulation globale. En effet, la fermeture des bouches entraine une augmentation des pertes de charge du réseau, générant ainsi une augmentation sensible de la pression du réseau, et une réduction sensible du débit, et déplaçant ainsi le point de fonctionnement. Pour rejoindre la courbe de consigne, la consigne du ventilateur va donc être réduite et la pression de consigne va également être réduite, et ce possiblement jusqu'à 2V environ. Lors du basculement « descendant », pour passer de la deuxième loi de régulation à débit constant, à la première loi de régulation à couple constant, le point de fonctionnement va passer de la « plus petite » courbe 4 correspondant à un débit constant le plus faible possible pour la deuxième loi de régulation, à la plus grande courbe 5 correspondant à une régulation à couple constant. Or, à ce point de bascule de loi de régulation moteur, la caractéristique de pertes de charge du réseau représentée par les courbes 7 fait que le ventilateur va accélérer et se trouver à un point plus haut, correspondant par exemple à 50m³/h-150Pa environ. Par la suite, la régulation va continuer à descendre sa consigne progressivement, jusqu'à trouver son point d'équilibre.

Dans le cas d'un basculement « montant », pour passer de la première loi de régulation à couple constant, à la deuxième loi de régulation à débit constant, la régulation est initialement effectuée par les lois matérialisées par les courbes 5, en suivant la courbe de régulation de la loi de commande. Jusqu'à 1.9V de consigne, le débit n'étant pas connu par la carte de régulation par l'intermédiaire de la consigne du ventilateur, celle-ci va alors maintenir une pression de 100Pa et ainsi atteindre ainsi près de 100m³/h avant d'atteindre le point de bascule montant et d'atteindre la tension de commande de 2V qui la fera basculer selon la deuxième loi de régulation, à savoir en débit constant. Ainsi, dans cette situation, entre 40 et 100 m³/h, le système n'est pas capable de mesurer son débit et ne peut donc prendre en compte la courbe de régulation objectif. Il existe alors une zone de fonctionnement de la régulation inférieure à la courbe 6 de la loi de commande de la régulation globale, ce qui n'est pas acceptable pour certains types de régulations certifiées. Un système de commande selon l'invention permet de résoudre cette difficulté.

Parce que la régulation à petit débit est réalisée au moyen des courbes à couple constant, il s'avère que la consommation électrique du moteur est sensiblement constante tout au long de chaque courbe, le couple du moteur étant directement lié à sa consommation électrique. Or, les régulations à pression constante ou débit constant se basent sur les informations de puissance et de vitesse de rotation. Cependant, en deçà d'une certaine puissance, leur faible précision de mesure ne permet plus de réguler.

En utilisant cette corrélation, avec une précision moindre, nous pouvons donc estimer le débit réel de l'installation, par prise en compte de la puissance ou du couple du moteur, liée directement à sa commande de consigne, et la vitesse de rotation du moteur, habituellement disponible sur les moteurs du marché par une sortie tachymétrique. Ce lien entre puissance et consigne étant établi en laboratoire par un nouveau type de mapping, avec des instruments de mesure précis pour obtenir une fonction de type Q=f (rpm, consigne). Ainsi, dans sa zone « bas débit », par exemple inférieure à 40m³/h, la régulation sera capable d'estimer en permanence le niveau de débit estimé de l'installation. Dès que ce niveau de débit dépasse un seuil déterminé, par exemple 30m³/h dans nos graphes, de manière à prendre en compte les incertitudes de cette estimation, la régulation peut forcer le passage en régulation à débit constant correspondant par exemple à une tension de 2.5V appliquée au moteur, pour éviter la sous-estimation évoquée précédemment.

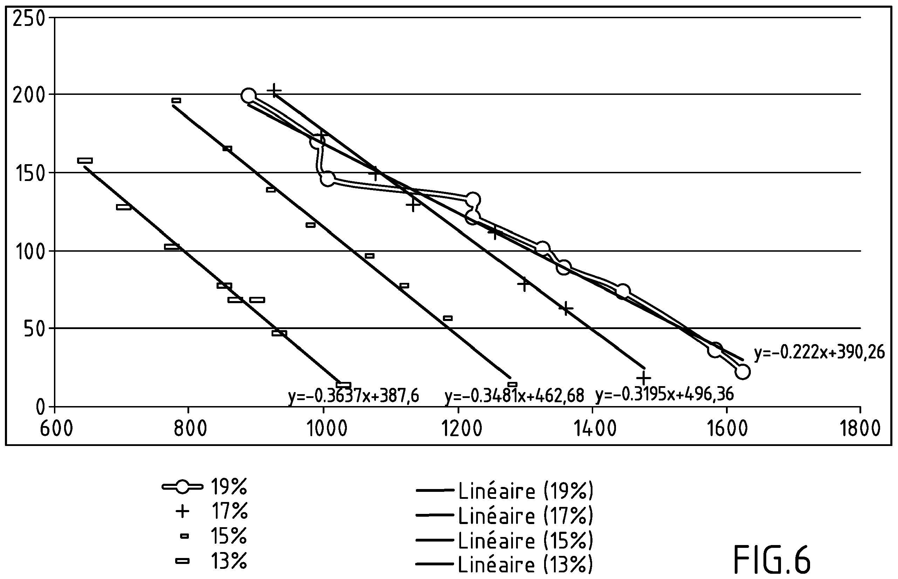

On représente, en Figure 6, les courbes de caractérisation du ventilateur. Ainsi, pour différentes consignes de moteur (13, 15, 17, 19% PWM soit 1.3V, 1.5V, 1.7V, 1.9V), on trace les points de débit en ordonnée en fonction de la vitesse de rotation du moteur en abscisse. Le sigle PWM provient de l'anglais *Pulse Width Modulation,* et correspond à une technique couramment utilisée pour synthétiser des signaux continus à l'aide de circuits à fonctionnement tout ou rien, ou plus généralement à états discrets. On vérifie qu'il y a bien bijection, et qu'il y a même une certaine linéarité. Une fois que cette linéarité a été matérialisée par une droite, on obtient des équations « arbitraires » de ces droites, qui permettent d'obtenir une estimation du débit, en fonction de la consigne qui représente une image de la puissance et de la vitesse de rotation mesurée. Ces équations pourront être utilisées, sous forme d'équations pures ou bien de tableau de données, pour que la carte de régulation puisse estimer le débit du système, dans le cas où cette régulation pilote le moteur en mode couple constant (c'est-à-dire dans notre exemple, une consigne entre 1.3V et 2V).

Il est à noter que si cette estimation de débit était suffisante pour éviter une sous-évaluation du débit, et permettre de forcer la consigne en débit constant au moment opportun, qui est idéalement légèrement inférieure à la consigne limite, par exemple de 30 m³/h dans notre exemple, il serait difficile voire impossible de réaliser cette fonction sur la totalité de la plage demandée, pour des raisons de précision et de tailles de données notamment.

Ainsi, pour éviter tout risque de stabiliser un point de fonctionnement hors de la loi de régulation globale souhaitée, le système est en mesure d'accepter une estimation très approximative du débit dans cette zone.

Il est important de préciser que le principe exposé pour une régulation à débit constant est transposable à une régulation en pression constante, avec un raisonnement identique.

La loi de régulation globale souhaitée est ici une régulation à pression croissante, mais l'invention serait tout à fait applicable à une loi de régulation à pallier de pression unique ou multiple, ou bien encore une courbe à pression décroissante par exemple.

Les différentes valeurs présentées dans l'invention sont bien évidemment paramétrables et ajustables en fonction de l'utilisation réelle, ou le dimensionnement du système. Par exemple, la plus petite courbe de la seconde plage de régulation peut passer de 40 à 60 m³/h, auquel cas le point de départ de la courbe en pression croissante ne pourra se situer qu'à un débit égal ou supérieur à 60 m³/h.

Toutes les valeurs numériques mentionnées dans la description n'apparaissent que comme des exemples illustratifs destinés à mieux interpréter les différents graphiques, mais ne constituent en aucune façon des limitations à l'invention. L'invention décrite est adaptée aux systèmes de ventilation possédant une perte de charge variable entre le ventilateur et le réseau aéraulique, et à ce titre particulièrement aux centrales de ventilation double flux et aux chauffe-eau thermodynamiques.

## Revendications

1. Système de commande pour un ventilateur, le ventilateur comprenant un moteur et une turbine centrifuge, ledit moteur étant piloté à partir d'une loi de commande définie par un calculateur du système de commande, **caractérisé en ce que** la loi de commande (3) résulte de l'adjonction de deux lois de régulations distinctes :
- une première loi (1) de régulation à couple constant (5) pour faire fonctionner le moteur sur une première plage de faibles débits,
- une deuxième loi (2) de régulation à débit constant (4) pour faire fonctionner le moteur sur une deuxième plage des débits plus élevés.

2. Système de commande selon la revendication 1, **caractérisé en ce que** la première loi de régulation (1) prend en compte la puissance du ventilateur et la vitesse dudit ventilateur.

3. Système de commande selon la revendication 2, **caractérisé en ce que** la prise en compte de la puissance du ventilateur est réalisée par la commande de celui-ci en couple constant.

4. Système de commande selon l'une quelconque des revendications 1 à 3, **caractérisé en ce que** dans au moins une partie de la première plage de faibles débits, une estimation du débit réel est calculée sur la base de l'information de commande du ventilateur, image du couple, donc de l'intensité et par suite de la puissance, et de l'information de vitesse du ventilateur.

5. Système de commande selon l'une quelconque des revendications 1 à 4, **caractérisé en ce que** lors de la survenance d'un événement, un changement de plage de débit est imposé au ventilateur.

6. Système de commande selon la revendication 5, **caractérisé en ce que** l'événement est le dépassement d'un seuil de débit par le débit réel calculé.

7. Système de commande selon la revendication 6, **caractérisé en ce que** ledit seuil de débit est sensiblement identique au débit correspondant à un régime minimum de la deuxième plage des débits plus élevés.

8. Système de commande selon l'une quelconque des revendications 1 à 7, **caractérisé en ce qu'**il est configuré pour intégrer un système de régulation équipé d'un élément de mesure, et un élément de perte de charge variable configuré pour être placé entre ledit élément de mesure et le ventilateur, pour rendre compte de cette perte de charge variable, une courbe de consigne de débit pour la loi de commande (3) est une loi de régulation (6) pour ce système complet.

9. Système de commande selon la revendication 8, **caractérisée en ce que** l'élément de mesure est un capteur de pression différentielle, l'élément de perte de charge variable étant un filtre et la loi de régulation (6) du système complet étant une régulation à pression constante ou croissante avec le débit.

10. Système de commande selon la revendication 8 ou 9, **caractérisé en ce que** la loi de régulation (6) du système complet est totalement ou partiellement une pression croissante avec le débit.

11. Système de commande selon la revendication 10, caractérisé que la loi de régulation (6) du système complet est associée, en début et/ou fin de courbe, à une régulation à pression constante.

12. Unité de ventilation comprenant un ventilateur comprenant un moteur et une turbine centrifuge et éventuellement, un système de régulation équipé d'un élément de mesure et un élement de perte de charge, **caractérisée en ce que** l'unité de ventilation comprend un système de commande selon l'une quelconque des revendications 1 à 11.

13. Installation comprenant l' unité de ventilation selon la revendication 12.

## Patentansprüche

1. Steuersystem für einen Lüfter, wobei der Lüfter einen Motor und eine Zentrifugalturbine umfasst, wobei der Motor auf der Grundlage eines Steuerungsgesetzes geführt wird, das von einem Rechner des Steuersystems definiert wird, **dadurch gekennzeichnet, dass** sich das Steuerungsgesetz (3) aus dem Hinzufügen von zwei verschiedenen Steuerungsgesetzen ergibt:
- einem ersten Gesetz (1) zur Regulierung mit konstantem Drehmoment, um den Motor in einem ersten Bereich mit schwachen Durchsätzen funktionieren zu lassen,
- ein zweites Gesetz (2) zur Regulierung mit konstantem Durchsatz (4), um den Motor in einem zweiten Bereich der erhöhten Durchsätze funktionieren zu lassen.

2. Steuerystem nach Anspruch 1, **dadurch gekennzeichnet, dass** das erste Regulierungsgesetz (1) die Leistung des Lüfters und die Geschwindigkeit des Lüfters berücksichtigt.

3. Steuerystem nach Anspruch 2, **dadurch gekennzeichnet, dass** die Berücksichtigung der Leistung des Lüfters durch die Steuerung desselben mit konstantem Drehmoment durchgeführt wird.

4. Steuersystem nach einem der Ansprüche 1 bis 3, **dadurch gekennzeichnet, dass** in mindestens einem Teil des ersten Bereichs mit geringen Durchsätzen eine Schätzung des tatsächlichen Durchsatzes auf der Grundlage der Steuerinformation des Lüfters, Abbild des Drehmoments, somit der Intensität und folglich der Leistung und der Geschwindigkeitsinformation des Lüfters berechnet wird.

5. Steuersystem nach einem der Ansprüche 1 bis 4, **dadurch gekennzeichnet, dass** beim Eintreten eines Ereignisses eine Änderung des Durchsatzbereichs dem Lüfter auferlegt wird.

6. Steuerystem nach Anspruch 5, **dadurch gekennzeichnet, dass** das Ereignis das Überschreiten einer Durchsatzschwelle durch den berechneten tatsächlichen Durchsatz ist.

7. Steuersystem nach Anspruch 6, **dadurch gekennzeichnet, dass** die Durchsatzschwelle im Wesentlichen identisch mit dem Durchsatz ist, der einem minimalen System des zweiten Bereichs der höheren Durchsätze entspricht.

8. Steuersystem nach einem der Ansprüche 1 bis 7, **dadurch gekennzeichnet, dass** es konfiguriert ist, um ein Regulierungssystem zu integrieren, das mit einem Messelement ausgestattet ist, und ein Element des variablen Ladeverlusts, das konfiguriert ist, um zwischen dem Messelement und dem Lüfter platziert zu sein, um diesen variablen Ladeverlust zu berücksichtigen, eine Durchsatz-Sollwertkurve für das Steuerungsgesetz (3) ein Regulierungsgesetz (6) für dieses vollständige System ist.

9. Steuersystem nach Anspruch 8, **dadurch gekennzeichnet, dass** das Messelement ein Differenzialdrucksensor ist, wobei das Element des variablen Ladeverlusts ein Filter ist und das Regulierungsgesetz (6) des vollständigen Systems eine Regulierung mit konstantem oder steigendem Druck mit dem Durchsatz ist.

10. Steuersystem nach Anspruch 8 oder 9, **dadurch gekennzeichnet, dass** das Regulierungsgesetz (6) des vollständigen Systems ganz oder teilweise ein wachsender Druck mit dem Durchsatz ist.

11. Steuersystem nach Anspruch 10, **dadurch gekennzeichnet, dass** das Regulierungsgesetz (6) des vollständigen Systems am Beginn und/oder Ende der Kurve mit einer Regulierung mit wachsendem Druck assoziiert ist.

12. Lüftungseinheit, umfassend einen Lüfter, umfassend einen Motor und eine Zentrifugalturbine und eventuell ein Regulierungssystem, das mit einem Messelement und einem Element des Ladeverlusts ausgestattet ist, **dadurch gekennzeichnet, dass** die Lüftungseinheit ein Steuersystem nach einem der Ansprüche 1 bis 11 umfasst.

13. Anlage, umfassend eine Lüftungseinheit nach Anspruch 12.

## Claims

1. A control system for a fan, the fan comprising a motor and a centrifugal turbine, said motor being controlled from a control law defined by a computer of the control system, **characterized in that** the control law (3) results from the addition of two separate regulating laws:
- a first constant torque (5) regulating law (1) to operate the motor over a first range of low flow rates,
- a second constant flow rate (4) regulating law (2) in order to operate the motor over a second range of higher flow rates.

2. The control system according to claim 1, **characterized in that** the first regulating law (1) accounts for the power of the fan and the speed of said fan.

3. The control system according to claim 2, **characterized in that** the taking into account of the power of the fan is done by the control thereof in constant torque.

4. The control system according to any one of claims 1 to 3, **characterized in that** in at least part of the first range of low flow rates, an estimate of the actual flow rate is calculated based on the control information of the fan, image of the torque, therefore of the intensity and subsequently of the power, and the speed information of the fan.

5. The control system according to any one of claims 1 to 4, **characterized in that** when an event occurs, a change of flow rate range is imposed on the fan.

6. The control system according to claim 5, **characterized in that** the event is the excess of a flow rate threshold by the calculated actual threshold.

7. The control system according to claim 6, **characterized in that** said flow rate threshold is substantially identical to the flow rate corresponding to a minimum state of the second range of the higher flow rates.

8. The control system according to any one of claims 1 to 7, **characterized in that** it is configured to incorporate a regulating system equipped with a measuring element, and a variable head loss element configured to be placed between said measuring element and the fan, to take account of this variable head loss, a flow rate setpoint curve for the control law (3) is a regulating law (6) for this complete system.

9. The control system according to claim 8, **characterized in that** the measuring element is a differential pressure sensor, the variable head loss element being a filter and the regulating law (6) of the complete system being a regulation with constant pressure or pressuring increasing with the flow rate.

10. The control system according to claim 8 or 9, **characterized in that** the regulating law (6) of the complete system is completely or partially a pressure increasing with the flow rate.

11. The control system according to claim 10, **characterized in that** the regulating law (6) of the complete system is associated, at the beginning and/or end of the curve, with regulation at constant pressure.

12. A ventilation unit comprising a fan comprising a motor and a centrifugal turbine and optionally, a regulating system equipped with a measuring element and a head loss element, **characterized in that** the ventilation unit comprises a control system according to any one of claims 1 to 11.

13. A facility comprising the ventilation unit according to claim 12.
